Europäisches Patentamt

European Patent Office

Office européen des brevets

(11) Veröffentlichungsnummer: **0 232 217 B1**

(12)

# EUROPÄISCHE PATENTSCHRIFT

(45) Veröffentlichungstag der Patentschrift: **16.10.91**

(21) Anmeldenummer: **87810001.5**

(22) Anmeldetag: **05.01.87**

(51) Int. Cl.⁵: **C02F 3/06**, C02F 3/10, B01D 21/00

(54) **Verfahren zur Abwasserreinigung sowie Abwasserreinigungsanlage.**

(30) Priorität: **09.01.86 CH 50/86**

(43) Veröffentlichungstag der Anmeldung:
**12.08.87 Patentblatt 87/33**

(45) Bekanntmachung des Hinweises auf die
Patenterteilung:
**16.10.91 Patentblatt 91/42**

(84) Benannte Vertragsstaaten:
**AT CH DE FR GB IT LI SE**

(56) Entgegenhaltungen:
**EP-A- 100 007**
**WO-A-86/03734**
**FR-A- 2 190 495**
**FR-A- 2 281 317**

**LEHR- UND HANDBUCH DER ABWASSER-TECHNIK, Band 4: Biologisch-chemische und weitergehende Abwasserreinigung, Auflage 3, 1985, Seiten 147,148,149,194,195,216, Ernst & Sohn, Verlag für Architektur und technische Wissenschaften, Berlin, DE**

**KORRESPONDENZ ABWASSER, Band 31, Nr. 2, 1984, Seiten 104-111; ATV. ST. Augustin,**

DE; H. SCHADE et al.:
"Parallelplattenabscheider"

AUFBEREITUNGSTECHNIK, Band 17, Nr. 9, 1976, Seiten 460-466, Schimer & Zeh, Wiesbaden, DE; W.E. SCHLITTER: "Lamellenklärer - Kompaktgeräte mit hohem Raumausnutzungsgrad"

(73) Patentinhaber: **Nill, Werner**
**Eigenheimweg 45**
**CH-8400 Winterthur(CH)**

(72) Erfinder: **Nill, Werner**
**Eigenheimweg 45**
**CH-8400 Winterthur(CH)**

(74) Vertreter: **Gachnang, Hans Rudolf**
**Algisserstrasse 33**
**CH-8501 Frauenfeld(CH)**

## Beschreibung

Die Erfindung bezieht sich auf ein Verfahren zur Abwasserreinigung gemäss dem Oberbegriff von Anspruch 1 und auf eine Abwasserreinigungsanlage gemäss dem Oberbegriff von Anspruch 2.

Bei einem bekannten Verfahren dieser Art (EP-A3-0 100 007) wird das Abwasser in einem Reaktor in Gegenwart von Schlamm gegebenenfalls unter Begasung mit Luft und/oder Sauerstoff behandelt und anschliessend das Abwasser-Belebtschlamm-Gemisch zu gereinigtem Wasser und Schlamm aufgeteilt.

Zur Erreichung einer vollständigen Trennung von gereinigtem Abwasser und Schlamm wird das Abwasser-Belebtschlamm-Gemisch nach Durchgang durch eine Behandlungszone des Reaktors durch eine im Reaktor ebenso vorhandene Trägerteilchen enthaltende Filterzone zwecks Abscheidung der Biomasse auf den Trägerteilchen geleitet. Die beladenen Trägerteilchen werden dann innerhalb der Filterzone beispielsweise mit Hilfe einer der Filterzone zugeordneten Regeneriereinrichtung, in der sie zwischen Presseinrichtungen zusammengedrückt werden, regeneriert. Die bei der Regenerierung von den Trägerteilchen entfernten Feststoffe, Bakterien und Flüssigkeiten werden getrennt vom gereinigten Abwasser aus dem Reaktor abgezogen, wozu der Presseinrichtung ein Auffangbehälter mit Schlammabzugsleitung zugeordnet ist.

Die bekannten Abwasserreinigungsanlagen erfordern umfangreiche apparative Installationen, die einerseits Energie verbrauchen und anderseits dauernd überwacht und gewartet werden müssen, was zu hohen Kosten führt und den Einsatz als Kleinanlagen oder in abgelegenen Gegenden ausschliesst.

Ziel der Erfindung ist die Schaffung eines Verfahrens und einer Abwasserreinigungsanlage, bei welcher der apparative Aufwand gegenüber bekannten Anlagen verringert und die Anlage weitgehend werkstättenseitig montiert und vorfabriziert werden kann. Ausserdem soll die Verarbeitung von Abwässern verschiedener Zusammensetzungen bei kurzfristiger Anpassung möglich sein. Auch chemische Reinigung soll durch blosse Zuschaltung möglich sein, ohne dass spezielle Massnahmen baulicherseits erforderlich wären.

Dieses Ziel lässt sich erreichen, wenn erfindungsgemäss für das Verfahren die Merkmalkombination des kennzeichnenden Teils von Anspruch 1 und für die Abwasserreinigungsanlage die Merkmale des kennzeichnenden Teils von Anspruch 2 vorgesehen werden.

Darüber hinaus können die Massnahmen gemäss den Ansprüchen 3 bis 9 vorgesehen sein.

Das Verfahren ist ein Durchlaufverfahren, wobei das zugeführte und zu reinigende Abwasser einem Vorklärbereich zugeführt wird. In diesem findet eine biologische Reinigung mit Mikroorganismen statt, welche auf Strömungsschikanen angesiedelt sind. In einem Teil dieses Vorklärbereiches, welcher an den benachbarten Belüftungsbereich grenzt, kann auch das in diesem eingeleitete und fein verteilte Reagenzgas mit dem Abwasser in Wechselwirkung stehen. Der grösste Teil dieser Wechselwirkung findet jedoch im Belüftungsbereich statt. Dadurch ist dieses Verfahren sehr anpassungsfähig und kann Abwässer verschiedenster Zusammensetzungen klären, jenachdem welche Gase eingeleitet werden. Dabei kann diese Anpassung sehr kurzfristig erfolgen und auch automatisch gesteuert werden. Insbesondere bei Industrieabwässern ist eine solche chemische Reinigung vielfach unumgänglich. Für normale Abwässer reicht jedoch Luft oder Sauerstoff als zugeführtes Gas aus. In einem an den Belüftungsbereich angrenzenden Schlammabscheidebereich wird der grösste Teil des Klärschlammes gesammelt und einer Schlammsammelmulde zugeführt, von der er kontinuierlich oder in zeitlichen Abständen abgesaugt wird. Das erst teilweise gereinigte Abwasser wird in einem anschliessenden Nachklärbereich, in dem das Abwasser vorteilhafterweise aufsteigen muss, entweder physikalisch oder ein zweites Mal biologisch gereinigt, wobei der hier anfallende Klärschlamm im Gegenstrom zum Schlammabscheidebereich gelangt. Das geklärte Abwasser wird vorzugsweise an einer Stelle, welche niveaumässig über dem Schlammabscheidebereich, aber unter der Mündung der Abwasserzuleitung in den Vorklärbereich liegt, abgelassen. Durch dies Niveaudifferenz kann der hydrostatische Druckunterschied für die Strömung in der Abwasserreinigungsanlage ausgenützt werden.

Weitere vorteilhafte Massnahmen ergeben sich aus der Beschreibung zweier Ausführungsbeispiele der Abwasserreinigungsanlage anhand der Zeichnung.

In dieser zeigt

Fig. 1     eine erste Ausführungsform einer Abwasserreinigungsanlage im Schnitt,
Fig. 2     einen Querschnitt durch den Vorklärbereich der Anlage nach Fig. 1,
Fig. 3     einen Querschnitt durch den Schlammabsetzbereich der Anlage nach Fig. 1,
Fig. 4     einen Querschnitt durch den Nachklärbereich der Anlage nach Fig. 1,
Fig. 5     ein Detail aus Fig. 1 im Schnitt AA von Fig. 2, am Übergang vom Vorklärbereich zum Belüftungsbereich mit Trenn- und und Gaszuführorganen,

Fig. 6     ein Detail aus Fig. 1 mit Schnitt BB von Fig. 3 im Schlammabsetzbereich,

Fig. 7     ein Detail der Fig. 1 im Schnitt CC nach Fig. 4 am Übergang vom Schlammabsetz- zum Nachklärbereich,

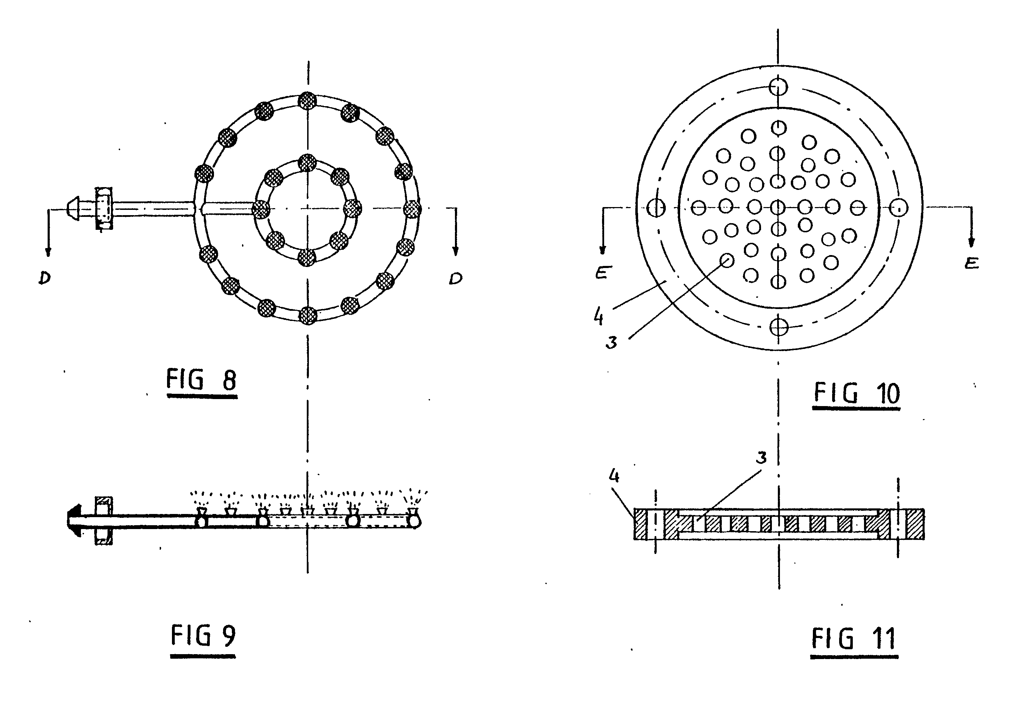

Fig. 8     eine Draufsicht auf einen Gaszuführeinsatz,

Fig. 9     den Gaszuführeinsatz nach Fig. 8 im Schnitt DD,

Fig. 10    die Rostplatte zwischen dem Vorklärbereich und dem Belüftungsbereich in Draufsicht,

Fig. 11    die Rostplatte im Schnitt EE nach Fig. 10,

Fig. 12    eine zweite Ausführungsform einer Abwasserreinigungsanlage im Schnitt mit rundem Querschnitt und

Fig. 13    eine Draufsicht auf eine Abwasserreinigungsanlage nach Fig. 12 mit rechteckigem Querschnitt.

Ein vertikal stehendes Vorklärrohr 1 (Vorklärbereich) beliebiger Querschnittsform weist an seinem oberen Ende eine Zuleitung 2 für das zu reinigende Abwasser auf. Das Vorklärrohr ist an seinem unteren Ende mit einer Öffnungen 3 aufweisenden Rostplatte 4 abgeschlossen. Diese Öffnungen 3 sind von solcher Grösse, um ein sicheres Halten des in das Vorklärrohr 1 eingefüllten körnigen Filtermaterials 5 zu gewährleisten. Dieses Filtermaterial 5 kann aus kantig- oder rundkörnigem Material, wie Steinen, Glas, Porzellan, Kunststoff usw. bestehen. Insbesondere kann Kies verwendet werden. Die Höhe des Vorklärrohres 1 ist abhängig vom Verschmutzungsgrad des durchschnittlich anfallenden Abwassers.

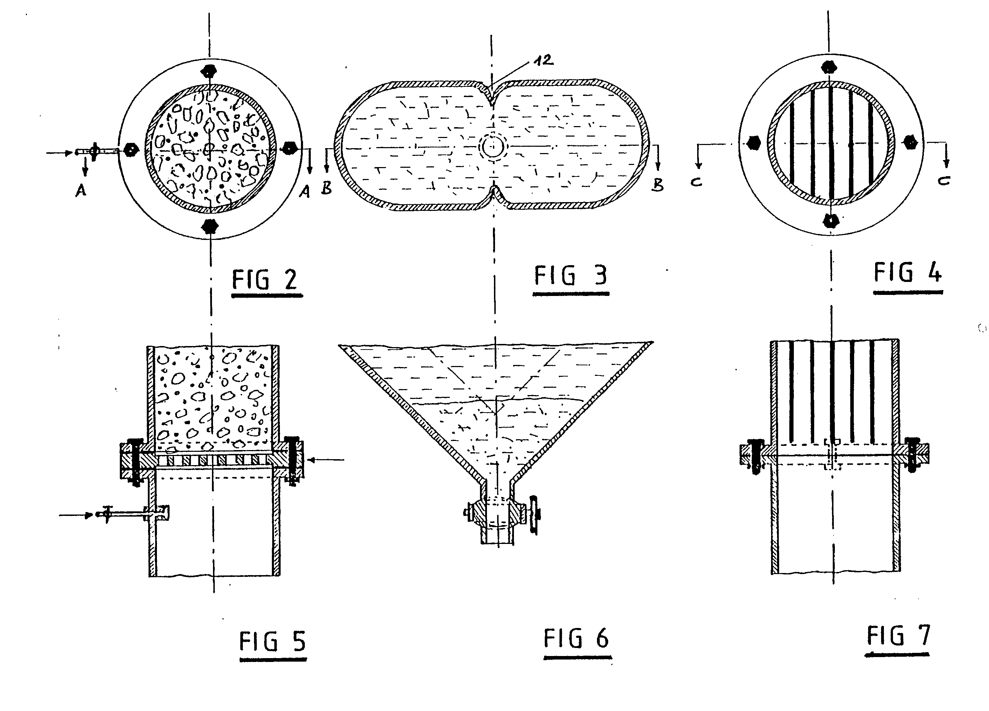

An das Vorklärrohr 1 schliesst ein Belüftungsstutzen 6 an, in den benachbart zur Rostplatte 4 eine Gaszuleitung 7 mündet, an welche im Innern des Belüftungsstutzens 6 ein Gasdüseneinsatz 8 angeschlossen ist. Unter einem Winkel alpha zur Achse des Belüftungsstutzens 6 ist mit seinem einen Schenkel ein v-förmiger Schlammabscheider 9 montiert, welcher an seiner tiefsten Stelle eine mit einem Absperrorgan 10 versehene Abflussleitung 11 aufweist. Dieser Schlammabscheider besitzt einen ovalen Querschnitt, wobei in der Symmetrieebene durch die kleine Achse des Querschnitts nach innen gezogene Prallrippen 12 angeordnet sind (Fig. 3).

Am anderen Schenkel des v-förmigen Schlammabscheiders 9 ist ein Nachklärrohr 13 angesetzt. Dieses weist einen am Schlammabscheider 9 angeflanschten Mantel 14 auf, in den im wesentlichen achsparallele Prall- und Leitplatten 15 eingesetzt sind. An seinem oberen Ende weist das Nachklärrohr 13 eine Abflussleitung 16 für das gereinigte Abwasser auf. Die Prall- und Leitplatten 14 können Strömungsschikanen besitzen, um das Abscheiden von Feinschlamm zu begünstigen. Der Winkel beta zwischen der Achse des Nachklärrohres 13 und der Vertikalen soll zwischen 20° und 70°, insbesondere 45° betragen.

Das zu reinigende Abwasser wird mit der Zuleitung 2 der Abwasserreinigungsanlage zugeführt und fliesst zufolge des künstlichen oder natürlichen (hydrostatischen) Druckunterschiedes durch die Anlage. Dabei wird das Abwasser während des Sickervorganges durch das körnige Filtermaterial mit den daran angesiedelten Mikroorganismen und das im Gegenstrom zugeführte Gas, welches beispielsweise Luft sein kann, gereinigt. Wird statt Luft anderes Gas verwendet, kann hier eine chemische Reinigung des Abwassers erfolgen. Somit kann diese Anlage die eingeleiteten Abwässer nach drei Arten reinigen: mit biologischem Abbau, nach dem Prinzip der Sprühfilteranlagen und mit chemischem Abbau. Dabei kann durch eine Anpassung des körnigen Filtermaterials an das durchschnittlich zu erwartende Abwasser eine sehr gleichmässige und intensive Umströmung desselben erzielt werden, was die Effizienz der Anlage und die Qualität der Reinigung wesentlich erhöht.

Im v-förmigen Schlammabscheider sinkt der im Vorklärrohr, im Belüftungsstutzen und im Nachklärrohr anfallende Klärschlamm zufolge seines Eigengewichtes zu Boden und wird abgeleitet. Das schon wesentlich gereinigte Abwasser strömt durch den mit Prall- und Leitplatten versehenen Nachklärrohr und kommt wieder mit den an den Rückseiten der Leitplatten sitzenden Mikroorganismen in Wechselwirkung, wodurch eine weitere Reinigung erfolgt. Durch die Ausgestaltung der Prall- und Leitplatten kann im Nachklärzylinder eine turbulente Strömung erzielt werden, welche eine sehr intensive Wechselwirkung mit den Migroorganismen zu Folge hat.

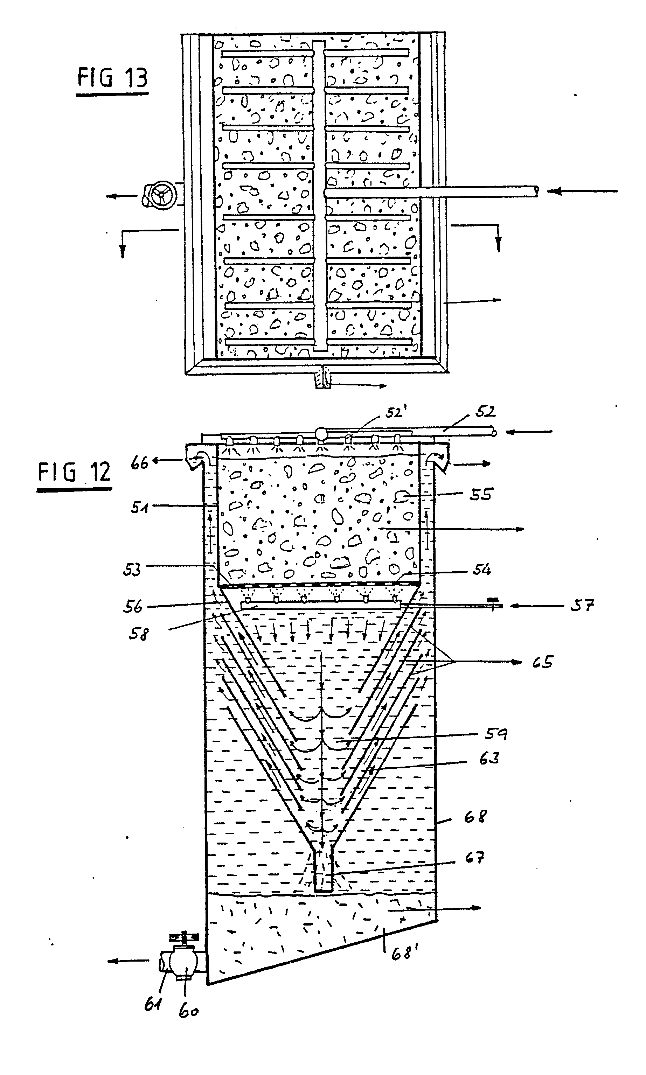

Eine zweite Ausführungsform einer Abwasserreinigungsanlage der genannten Art (Fig. 12, 13) weist ein mit körnigem Filtermaterial 55 gefüllten Vorklärrohr 51 auf, welches an seiner Oberseite eine Zuleitung 52 für das zu reinigende Abwasser, die insbesondere mit Sprühdüsen versehen ist, besitzt. Der Boden des Vorklärrohres 51 (Vorklärbereich) ist als Rostplatte 54 mit Öffnungen 53 ausgebildet. Benachbart und unterhalb dieser ist ein nach unten offener, kegelstumpfförmiger Belüftungsstutzen 56 am Vorklärrohr angeordnet. In diesen Belüftungsstutzen ragt eine Gasleitung 57, welche einen Gasdüseneinsatz 58 trägt. Je nach einem Abstand voneinander und koaxial zum Belüftungsstutzen 56 sind mehrere kegelförmige Prall- und Leiteinsätze 65 angeordnet, deren untere Kegelöffnung von Einsatz zu Einsatz kleiner ist. Der letzte, unterste Einsatz weist ein Schlammfallrohr 67 zu Aufnahme des von den Einsätzen abrutschenden Klärschlammes und dessen Weiterleitung an einen Schlammbehälter 68 auf. Dieser umgibt mit seinem oberen Abschnitt die Prall- und Leiteinsätze 65 sowie den Belüftungsstutzen 56 sowie das Vorklärrohr 51 koaxial. Der Schlammbehälter 68 weist eine mit einem Absperrorgan 60 versehene Schlammabflussleitung 61 auf. An seinem oberen Rand ist ein Ablauf für das geklärte Abwasser vorgesehen.

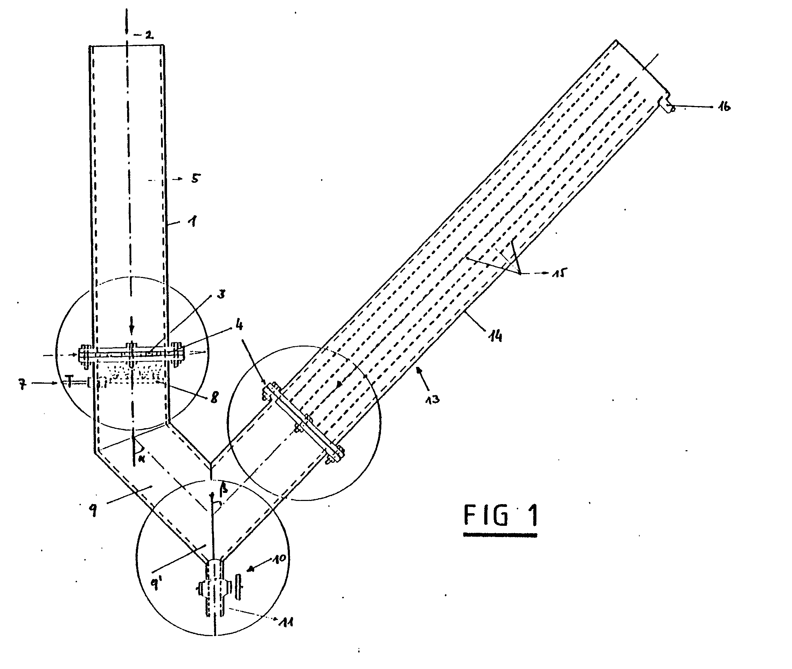

Die Wirkungsweise dieser zweiten Ausführungsform einer Abwasserreinigungsanlage ist im wesentlichen gleich wie bei der nach Fig. 1. Auch hier kann körniges Filtermaterial wie Stein, Glas, Porzellan oder Kunststoff verwendet werden. Der ausgefällte Klärschlamm sinkt durch die koaxialen Öffnungen der Prall- und Leiteinsätze zum Schlammfallrohr des untersten Einsatzes und gelangt so in den Schlammbehälter. Der zwischen den Einsätzen ausgefällte Schlamm gleitet entlang diesen im Gegenstrom des aufsteigenden, geklärten Abwassers gegen die trichterförmigen zentralen Öffnungen der Einsätze. Der Schlamm wird via Schlammabflussleitung abtransportiert.

Der Querschnitt einer solchen Abwasserreinigungsanlage kann jede beliebige geometrische Form aufweisen, insbesondere kann er auch rechteckig sein (Fig. 13).

Die besonderen Vorteile dieser Anlagen sind ein erhöhter Reinigungseffekt, welcher bis 98 % erreichen kann, eine raschere Anpassung an unterschiedliche Abwasserzusammensetzungen sowie die Möglichkeit, ohne weiteren apparativen Aufwand eine chemische Reinigung durchführen zu können. Insbesondere ist es möglich, eine solche Abwasserreinigungsanlage als vorfabrizierte Einheit herzustellen und zu installieren.

Bei Pilotanlagen wearen folgende Bedingungen verwirklicht und führten zu den untenstehenden Ergebnissen.

| | |
|---|---|
| Durchmesser Vorklärrohr: | 15 cm |
| Filtermaterial: | Steine |
| Korndurchmesser des Filtermaterials: | 4,8 cm |
| Höhe der Filtermaterialschicht: | 80 cm |
| Luftzufuhr: | 30 $m^3$/kg BOD |
| Durchmesser Nachklärrohr: | 20 cm |
| Leitplatten: | PVC |
| Plattenlänge: | 100 cm |
| Plattenabstand: | 3,8 cm |
| Abwasser: | synthetisches und natürliches Abwasser |
| Durchsatz: | 20-60 l/Tag |

| Parameter | Zufluss | Ausfluss |
|---|---|---|
| BOD (mg/l) | 300-450 | 35 – 85 |
| TOC (mg/l) | 190-250 | 18 – 87 |
| TSS (mg/l) | 125-169 | 8 – 43 |

25.4.1982/RT

00182

## Patentansprüche

1. Verfahren zur Abwasserreinigung, mit einer Vorklär-, Belüftungs-, einer Schlammausfäll- und einer Nachklärstufe, bei dem das zu klärende Abwasser im Gegenstrom mit einem Reagenzgas einen Vorklärbereich durchströmt, in welchem Strömungsschikanen erster Art vom Abwasser und vom Reagenzgas umströmt werden, welche einerseits Mikroorganismen tragen und andererseits die Gas-Abwasser-Wechselwirkung intensivieren, wobei das vorgeklärte Abwasser nach Trennung von einem Teil des Klärschlammes in einem Schlammabscheider in einem Nachabscheider um Strömungsschikanen zweiter Art strömt und dabei weiterer Klärschlamm anfällt, dadurch gekennzeichnet, dass der im Vorklärbereich ausgefällte Klärschlamm und der im Nachklärbereich ausgefällte Klärschlamm zufolge seines Eigengewichtes in eine unterhalb der beiden Bereiche liegende Schlammsammelmulde absinkt, gesammelt und von dort abgeführt wird.

2. Abwasserreinigungsanlage mit einem Vorklärbereich, einem daran angeschlossenen Belüftungsbereich und einem an diesem anschliessenden Nachklärbereich, wobei der Vorklärbereich (1,51) Strömungsschikanen erster Art (5,55) aufweist, welche vom Abwasser intensiv umströmt werden und in Strömungsrichtung des Abwassers anschliessend an den Vorklärbereich (1,51) ein Belüftungsbereich (6,56) mit einer Vorrichtung zur Einleitung eines Reagenzgases (7,8; 57,58) im Gegenstrom zum Abwasser angeordnet ist und im Nachklärbereich (13,63) Strömungsschikanen zweiter Art (15,65) angeordnet sind, durch welche nochmals Klärschlamm aus dem Abwasser ausgeschieden wird, dadurch gekennzeichnet, dass der Vorklärbereich (1,51) und der Nachklärbereich (13,63) über einem Schlammabscheidebereich (9,59) angeordnet und mit diesem verbunden sind derart, dass in den beiden Klärbereichen (1,51; 13,63) ausgeschiedener Schlamm zufolge seines Eigengewichtes und ohne mechanische Hilfsmittel im Schlammabscheidebereich (9,59) absinkt.

3. Abwasserreinigungsanlage nach Anspruch 2, dadurch gekennzeichnet, dass die Strömungsschikanen erster Art aus einer Füllung von körnigem Filtermaterial bestehen.

4. Abwasserreinigungsanlage nach Anspruch 3, dadurch gekennzeichnet, dass das körnige Filtermaterial aus porösem oder unporösem Material, Kieselsteinen, Glasperlen, Kunststoffkugeln, usw., besteht, das auf einer Rostplatte (4) über einem Gasdüseneinsatz (8) zum Einleiten von Reagenzgas getragen wird.

5. Abwasserreinigungsanlage nach Anspruch 2, dadurch gekennzeichnet, dass die Strömungsschikanen erster Art und Strömungsschikanen zweiter Art im Nachklärbereich (13,63) Prallplatten- und Leiteinsätze sind.

6. Abwasserreinigungsanlage nach Anspruch 4, dadurch gekennzeichnet, dass der Vorklärbereich aus einem im wesentlichen vertikal stehenden Rohr (1) besteht und an seinem oberen Ende eine Zuleitung (2) für das zu reinigende Wasser aufweist, dass der Nachklärbereich aus einem zum Rohr (1) in einem Winkel von 20° bis 70° angeordneten zweiten Rohr (13) besteht, an dessen oberem Ende eine Abflussleitung (16) angeordnet ist, und dass die beiden Rohre (1,13) durch einen v-förmigen Schlammabscheider (9) verbunden sind, an dessen tiefster Stelle eine Ablaufleitung (11) für den Schlamm angebracht ist.

7. Abwasserreinigungsanlage nach Anspruch 4, dadurch gekennzeichnet, dass der Vorklärbereich aus einem innerhalb des rohrförmigen Nachklärbereiches angeordneten, unten offenen, kegelstumpfförmigen Vorklärrohr (51) besteht, dass koaxial und mit Abstand zum kegelstumpfförmigen Teil (56) des Rohres (51) kegelstumpfmantelförmige Leiteinsätze (65) angeordnet sind, und dass der untere Teil des Nachklärbereiches als Schlammsammelbehälter (68) ausgebildet ist.

8. Abwasserreinigungsanlage nach Anspruch 7, dadurch gekennzeichnet, dass das Vorklärrohr (51) an seinem oberen Ende eine Zuleitung (52) mit Sprühdüsen (52') aufweist, dass am oberen Ende des Nachklärbereiches eine Abflussleitung (66) für gereinigtes Wasser, und dass am unteren Ende des Schlammsammelbehälters (68) eine Schlammabflussleitung (61) angeordnet ist.

9. Abwasserreinigungsanlage nach einem der Ansprüche 7 oder 8, dadurch gekennzeichnet, dass oberhalb des kegelstumpfförmigen Teiles (56) des Rohres (51) eine Rostplatte (54) eingesetzt ist, unter welcher ein Gasdüseneinsatz (58) zum Einleiten von Reagenzgas angeordnet ist.

## Claims

1. Method of purifying waste-water, comprising a preclarifying stage, an aerating stage, a sludge precipitating stage and a subsequent clarifying stage, wherein the waste-water to be clarified flows through a preclarifying region in counter-current with a reagent gas, flow deflection plates of a first type having the waste-water and reagent gas flowing therearound in said region, which plates, on the one hand, carry microorganisms and, on the other hand, intensify the interaction between the gas and waste-water, wherein the preclarified waste-water, after being separated from a portion of the clarifying sludge in a sludge separator, flows in a subsequent separator around flow deflection plates of a second type, and additional clarifying sludge is thereby accumulated, characterised in that the clarifying sludge, which is precipitated in the preclarifying region, and the clarifying sludge, which is precipitated in the subsequent clarifying region, drop, as a consequence of their own weight, into a sludge collecting trough, which is situated beneath the two regions, collected and discharged therefrom.

2. Waste-water purifying plant, having a preclarifying region, an aerating region which communicates therewith, and a subsequent clarifying region, which communicates with the latter region, the preclarifying region (1, 51) having flow deflection plates of a first type (5, 55), which have the waste-water intensively flowing therearound, and an aerating region (6, 56), having a device for introducing a reagent gas (7, 8; 57, 58), is disposed in counterflow relative to the waste-water, when viewed in respect of the flow direction of the waste-water subsequent to the preclarifying region (1, 51), and flow deflection plates of a second type (15, 65) are disposed in the subsequent clarifying region (13, 63), by means of which plates clarifying sludge is again removed from the waste-water, characterised in that the preclarifying region (1, 51) and the subsequent clarifying region (13, 63) are disposed above a sludge separating region (9, 59) and are connected thereto in such a manner that sludge, which has been removed in the two clarifying regions (1, 51; 13, 63), drops as a result of its own weight and without mechanical aids in the sludge separating region (9, 59).

3. Waste-water purifying plant according to claim 2, characterised in that the first type of flow deflection plates comprise a filling of granular filter material.

4. Waste-water purifying plant according to claim 3, characterised in that the granular filter material is formed from porous or non-porous material, pebbles, glass beads, plastics material balls, etc. and is carried on a grid-like plate (4) above a gas nozzle insert (8) for the introduction of reagent gas.

5. Waste-water purifying plant according to claim 2, characterised in that the first type of flow deflection plates and the second type of flow deflection plates are baffle plate inserts and guide inserts in the subsequent clarifying region (13, 63).

6. Waste-water purifying plant according to claim 4, characterised in that the preclarifying region comprises a substantially vertically extending pipe (1) and, at its upper end, a feed pipe (2) for supplying the water to be purified, in that the subsequent clarifying region comprises a second pipe (13), which is disposed at an angle of 20° to 70° relative to the pipe (1), and a discharge pipe (16) is disposed at the upper end of the second pipe, and in that the two pipes (1, 13) are connected by means of a V-shaped sludge separator (9), a discharge pipe (11) for the sludge being provided at the lowest point of said separator.

7. Waste-water purifying plant according to claim 4, characterised in that the preclarifying region comprises a frustoconical preclarifying pipe (51), which is disposed internally of the tubular subsequent clarifying region and is open at its lower end, in that frustoconical guide inserts (65) are disposed coaxially with and at a spacing from the frustoconical portion (56) of the pipe (51), and in that the lower portion of the subsequent clarifying region is in the form of a sludge collecting container (68).

8. Waste-water purifying plant according to claim 7, characterised in that the preclarifying pipe (51) has, at its upper end, a feed pipe (52) which is provided with spray nozzles (52'), in that a discharge pipe (66) for purified water is disposed at the upper end of the subsequent clarifying region, and in that a sludge discharge pipe (61) is disposed at the lower end of the sludge collecting container (68).

9. Waste-water purifying plant according to one of claims 7 or 8, characterised in that a grid-like plate (54) is inserted above the frustoconical portion (56) of the pipe (51), beneath which plate a gas nozzle insert (58) is disposed for the introduction of reagent gas.

**Revendications**

1. Procédé d'épuration des eaux usées, comportant une étape de préclarification, une étape d'aération, une étape de décantation des boues et une étape de clarification secondaire, dans lequel on fait s'écouler les eaux usées à clarifier contre un qaz réactif dans une zone de préclarification où les eaux

EP 0 232 217 B1

usées et le gaz réactif sont amenés à s'écouler autour de chicanes d'un premier type qui, d'une part, portent des micro-organismes et qui, d'autre part, accroissent l'interaction gaz-eaux usées, procédé dans lequel, après avoir été débarrassées d'une partie de la boue de décantation dans un séparateur de boues, les eaux usées préclarifiées s'écoulent dans un séparateur secondaire autour de chicanes d'un deuxième type où l'on obtient à nouveau de la boue de décantation, caractérisé en ce que la boue de décantation qui s'est déposée dans la zone de préclarification et celle qui s'est déposée dans la zone de décantation secondaire sont entraînées par leur poids propre vers un bac de recueil des boues situé au-dessous des deux zones, y sont recueillies, puis sont évacuées de ce bac.

2. Installation d'épuration des eaux usées, comportant une zone de préclarification suivie d'une zone d'aération elle-même suivie d'une zone de clarification secondaire, installation dans laquelle la zone de préclarification (1, 51) comporte des chicanes d'un premier type (5, 55) exposées de façon intensive à l'écoulement des eaux usées, dans laquelle, sur le trajet d'écoulement des eaux usées en aval de la zone de préclarification (1, 51), est disposée une zone d'aération (6, 56) munie d'un dispositif destiné à admettre, dans le sens contraire au sens d'écoulement des eaux usées, un gaz réactif (7, 8 ; 57, 58), et dans laquelle, dans la zone de clarification secondaire (13, 63), sont disposées des chicanes d'un deuxième type (15, 65) permettant à nouveau le dépôt de boues de décantation à partir des eaux usées, installation caractérisée en ce que la zone de préclarification (1, 51) et la zone de clarification secondaire (13, 63) sont disposées au-dessus d'une zone de séparation (9, 59) des boues et sont reliées à celle-ci de telle façon que les boues qui se sont déposées dans les deux zones de clarification (1, 51 ; 13, 63) sont entraînées par leur propre poids et sans aide mécanique vers la zone de séparation (9, 59) des boues.

3. Installation d'épuration des eaux usées selon la revendication 2, caractérisée en ce que les chicanes du premier type sont constituées d'un remplissage de matériau qranulaire filtrant.

4. Installation d'épuration des eaux usées selon la revendication 3, caractérisée en ce que le matériau qranulaire filtrant est constitué d'un matériau poreux ou non poreux, de galets, de billes de verre, de billes de matière plastique, etc., et est porté par une grille (4) située au-dessus d'un dispositif (8) à buses destiné à l'introduction du gaz réactif.

5. Installation d'épuration des eaux usées selon la revendication 2, caractérisée en ce que les chicanes du premier type et les chicanes du deuxième type dans la zone de clarification secondaire (13, 63) sont des pièces rapportées sous forme de plaques déflectrices et de pièces de guidage.

6. Installation d'épuration des eaux usées selon la revendication 4, caractérisée en ce que la zone de préclarification est formée d'un tube ascendant (1) sensiblement vertical, qui comporte à son extrémité supérieure une entrée (2) pour l'eau à épurer, en ce que la zone de clarification secondaire est formée d'un deuxième tube (13) qui fait un angle de 20 à 70° avec le tube (1) et à l'extrémité supérieure duquel est disposée une canalisation d'évacuation (16) et en ce que les deux tubes (1, 13) sont reliés ensemble par un séparateur de boues (9) en forme de V comportant dans sa partie la plus profonde une canalisation (11) d'évacuation des boues.

7. Installation d'épuration des eaux usées selon la revendication 4, caractérisée en ce que la zone de préclarification est formée d'un tube de préclarification (51) en forme de tronc de cône, ouvert vers le bas, et situé à l'intérieur de la zone tubulaire de clarification secondaire, en ce que, coaxialement à et à distance de la partie tronconique (56) du tube (51) sont disposées des pièces rapportées de quidage (65) en forme de tronc de cône et en ce que la partie inférieure de la zone de clarification secondaire est réalisée sous la forme d'une cuve de recueil (68) des boues.

8. Installation d'épuration des eaux usées selon la revendication 7, caractérisée en ce que le tube de préclarification (51) comporte, à son extrémité supérieure, une entrée (52) à buses de pulvérisation (52'), en ce que, à l'extrémité supérieure de la zone de clarification secondaire, est disposée une canalisation (66) d'évacuation de l'eau épurée et en ce que, à l'extrémité inférieure de la cuve de recueil (68) des boues, est disposée une canalisation d'évacuation (61) des boues.

9. Installation d'épuration des eaux usées selon l'une des revendications 7 et 8, caractérisée en ce que, au-dessus de la partie tronconique (56) du tube (51) est montée une grille (54) au-dessous de laquelle

7

est disposé un dispositif (58) à buses destiné à l'introduction du gaz réactif.

FIG 1

EP 0 232 217 B1

FIG 2

FIG 3

FIG 4

FIG 5

FIG 6

FIG 7

FIG 10

FIG 11

FIG 8

FIG 9

FIG 13

FIG 12